# EUROPEAN PATENT APPLICATION

(11) **EP 1 050 689 A2**
(43) Date of publication of application: **08.11.2000**
(21) Application number: 00401186.2
(22) Date of filing: 28.04.2000
(51) Int. Cl.: F16B 13/00, F16B 25/10, A47G 1/20

(54) **Wallboard anchor with hook**

(30) Priority: 03.05.1999 US 304154
(71) Applicant: ILLINOIS TOOL WORKS INC., Glenview, Illinois 60025 (US)
(72) Inventor: Bernhard, Paul A., Palatine, Illinois 60067 (US)
(74) Representative: Bloch, Gérard

(57) **Abstract**

A threaded anchor having a threaded shaft (50), a wall flange (70) extending generally radially from a trailing end portion (54) of the shaft, a stud (90) protruding from an outer surface (72) of the wall flange (70), the stud (90) being aligned substantially axially with the shaft, a hanger flange (100) extending generally radially from at least one side portion of the stud (90) and spaced axially from the wall flange (70), and a tool engagement portion (111) on the anchor.

## Description

### BACKGROUND OF THE INVENTION

The invention relates generally to threaded anchors, or inserts, useable for supporting articles, for example picture wire and frame hooks from wallboard.

Threaded inserts, or anchors, are known generally and used widely to fasten articles to wallboard, for example friable gypsum based materials covered on opposing sides with a paper material.

European Patent 0 165 674 entitled "Insert for a Drywall" assigned commonly herewith discloses a wallboard anchor comprising generally a cylindrical body having a high thread disposed helically thereabout, a flange disposed on one end thereof and spaced apart from the threaded portion, and a frangible flat drilling blade extending axially from a leading end portion of the cylindrical body. The cylindrical body also includes a screwdriver recess disposed on an end of the flange for installation, and an axial bore formed at least partially therethrough for accommodating a screw or other threaded fastener.

Other known wallboard anchors include other forms of drilling ends or a cutting tip formed on the threaded shaft, some with an axial bore extending fully therethrough for displacing wallboard material during installation ofthe anchor. See, for example, U.S. Patents Nos. 5,536,121 and 5,752,792 both entitled "Anchor Insert", and International Publication No. WO 96/16273 entitled "Anchor Insert Improvement".

U.S. Patent No. 5,752,792 also discloses assembling the wallboard anchor with a separate screw hook by screwing a threaded portion of the screw hook into the axial bore of the anchor. This anchor and screw hook combination however requires assembly, and the hook portion thereof has a relatively high profile insofar as the hook protrudes significantly from the wallboard upon installation of the anchor. This combination is likely best suited for use as a ceiling hook or as a wall hook for articles supported or suspended well below the hook. In other words, the high profile hook is not desirable for applications where it is located between the wallboard and the article, for example picture frame hanging applications, since the protruding hook prevents mounting of the article relatively flatly against the wallboard. The hook, moreover, is not disposed symmetrically about the axial center-line of the anchor.

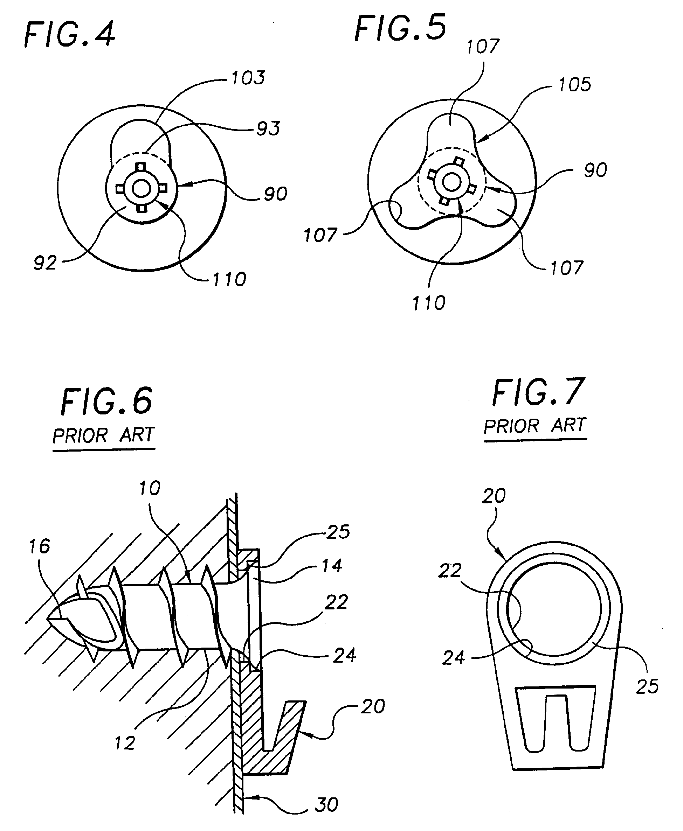

Prior art FIG. 6 of the present application illustrates a known wallboard anchor 10 having a cutting tip 16 as disclosed in International Publication No. WO 96/16273 assembled with a separate prior art wall hook 20, shown also in prior art FIG. 7 of the present application. The wall hook 20 includes an opening 22 through which the threaded shaft 12 of the anchor 10 is disposed during assembly, and a recess 24 for accommodating a flange portion 14 of the anchor 10 upon installation thereof in a wallboard. The recess includes a seat 25 against which the anchor flange 14 is engaged to retain the wall hook 20 against the wallboard 30. The prior art anchor and wall hook combination of FIG. 7, however, requires assembly and alignment of the hook portion during installation, includes components that may become lost or separated, and for some applications protrudes excessively from the wallboard.

The present invention is drawn toward advancements in the art of threaded anchors, or inserts, useable for supporting articles from wallboard.

An object of the invention is to provide a novel threaded anchor according to claim 1 useable for supporting articles from wallboard that overcome problems in the art.

Accordingly, the invention provides a novel threaded anchor useable for supporting articles from wallboard that is economical, and that, at least in some embodiments, do not require assembly of separate components or do not require rotational alignment during or upon installation.

The anchor of the invention may have a relatively low profile.

The anchor of the invention may be provided for supporting a picture wire and a frame hook from wallboard.

These and other objects, aspects, features and advantages of the present invention will become more fully apparent upon careful consideration of the following Detailed Description of the Invention and the accompanying Drawings, which may be disproportionate for ease of understanding, wherein like structure and steps are referenced generally by corresponding numerals and indicators.

### BRIEF DESCRIPTION OF THE DRAWINGS

FIG. 1 is an anchor for supporting articles from wallboard according to an exemplary embodiment of the invention.

FIG. 2 is an end view of an anchor.

FIG. 3 is an end view of an alternative anchor configuration.

FIG. 4 is an end view of another alternative anchor configuration.

FIG. 5 is an end view of yet another alternative anchor configuration.

Prior art FIG. 6 is a known anchor and wall hook assembly.

Prior art FIG. 7 is another view of the wall hook of FIG. 6.

### DETAILED DESCRIPTION OF THE INVENTION

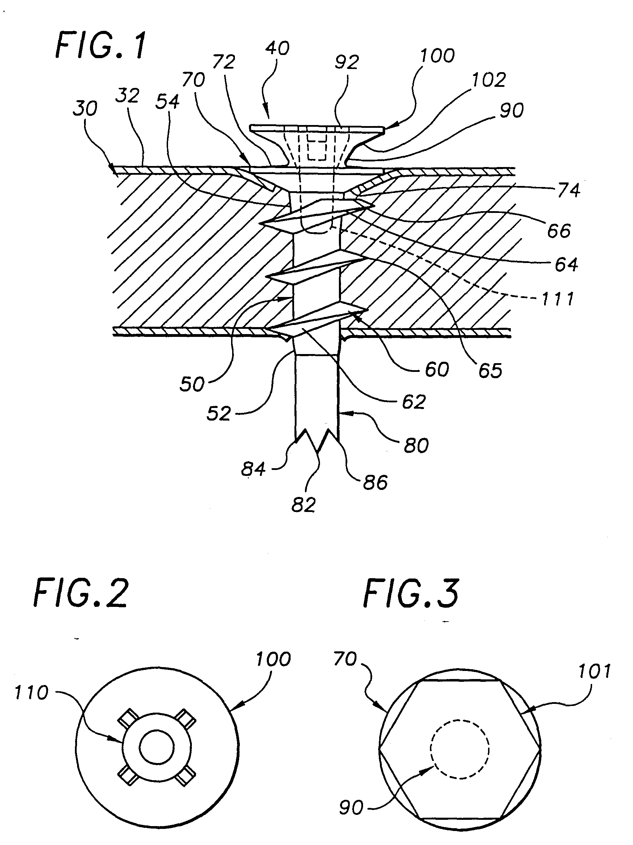

FIG. 1 illustrates an anchor 40 for supporting articles from wallboard 30, which is defined herein as any friable material, including but not limited to paper covered gypsum based sheet materials used commonly in the construction industry. The anchor comprises generally a shaft 50 having a leading end portion 52 and a trailing end portion 54 with a screw thread 60 disposed at least partially thereabout. The screw thread is engageble with the wallboard for securely anchoring the anchor 40 therein, as discussed further below.

The anchor 40 also comprises a wall flange 70 extending generally radially from the trailing end portion 54 of the shaft 50. The wall flange 70 includes an outer surface 72, which is preferably relatively flat so that it mounts flushly with, or slightly recessed relative to, an outer surface 32 of the wallboard 30 upon installation of the anchor.

In the exemplary embodiment, the wall flange 70 also includes a generally conical inner surface 74 to facilitate advancement of the anchor 40 into the wallboard until the outer surface 72 of the wall flange 70 is mounted flushly with the outer surface 32 of the wallboard 30. The generally conical inner surface 74 of the wall flange also minimizes deformation of the wallboard upon installation of the anchor to provide a relatively continuous interface between the outer surface 72 of wall flange 70 and the outer surface 32 of the wallboard 30. In one embodiment, the diameter of the flange 70 is approximately the same as or slightly larger than the diameter of the screw thread 60, and in other embodiments the flange 70 is much larger than the screw thread to improve the shear performance of the anchor.

The screw thread 60 is generally a helical member disposed about and protruding radially from the shaft 50. The thread 60 includes generally a leading end thread portion 62 and a trailing end thread portion 64 with a terminating trailing end 66. In some embodiments, the screw thread may have notches formed on the outer helical edge 65 thereof to facilitate cutting through the wallboard during installation, as is known generally.

In the exemplary embodiment of FIG. 1, the leading end thread portion 62 has a narrowing taper that decreases toward the leading end portion 52 of the shaft 50. The screw thread 60 also has preferably a relatively large radial dimension, or diameter, to increase the surface contact area with the wallboard. In one embodiment, the diameter of the screw thread 60 is approximately twice the diameter of the shaft 50. A greater screw thread diameter provides better anchor shear performance. In embodiments where the anchor is used primarily for supporting hanging articles, the screw thread diameter should be sized commensurately with the load to be supported by the anchor for the particular application.

The screw thread 60 is preferably spaced axially from the wall flange 70, as illustrated in FIG. 1, and in one embodiment the terminating trailing end 66 thereof is spaced axially from the wall flange 70 by an amount less than one thread pitch.

The anchor 40 also comprises generally a wallboard displacing portion on or near the leading end portion the shaft 50. In FIG. 1, the wallboard displacing portion is a generally flat drilling blade 80 extending axially from the leading end portion 52 of the shaft 50. In one embodiment, the drilling blade includes a central spike 82 and at least one and preferably two peripheral spikes 84 and 86 forming a tip portion thereof, as disclosed more fully in EP 0 165 674 entitled "Insert for a Drywall".

Instead of the drilling blade 80 in the exemplary embodiment of FIG. 1, the wallboard displacing portion of the anchor may have a drilling end or a cutting tip formed on the threaded shaft incorporating other designs, for example the configuration illustrated in prior art FIG. 6 of the present application and configurations disclosed in U.S. Patents Nos. 5,536,121 and 5,752,792 both entitled "Anchor Insert" and in International Publication No. WO 96/16273 entitled "Anchor Insert Improvement".

The anchor 40 of the present invention also comprises a stud 90 protruding from the outer surface 72 of the wall flange 70. The stud 90 is aligned substantially axially with the shaft 50, and may be considered an extension of the shaft beyond the wall flange 70. The anchor 40 also comprises a hanger flange 100 spaced axially from the wall flange and extending generally radially from at least one side portion of the stud 90. The hanger flange 100 is axially spaced sufficiently far from the wall flange 70 to provide a supporting surface on the stud 90 between the wall flange 70 and the hanger flange 100 to support an article, for example to support picture frame wire or a toothed frame hook.

The stud 90 has an end surface 92 that preferably coincides with the hanger flange 100, as illustrated in FIG. 1, to reduce the profile of the exposed portions thereof, and more particularly to reduce the extent to which the stud 90 and the hanger flange 100 protrude from the outer surface 32 of the wallboard 30 after installation. Also, the stud 90 preferably extends no farther from the outer end 72 of the wall flange 70 than is required to provide a supporting surface thereon between the wall flange 70 and the hanger flange 90, thereby further reducing the profile of the exposed portion of the anchor. The hanger flange 100 generally prevents the wire or toothed picture frame hook from sliding off the stud 90.

In FIGS. 1 and 2, the hanger flange 100 is a generally disk shaped member extending generally radially from all sides of the stud 90. Also, the hanger flange 100 is preferably disposed generally symmetrically about the axis of the stud 90. The generally disk shaped hanger flange 100 and the generally symmetrical positioning thereof on the stud 90 provides a universal hanger flange that does not require angular orientation thereof upon installation of the anchor, as is required in known prior art asymmetrical picture hooks.

The axial alignment of the stud 90 with the axis of the shaft 50 simplifies the installation of the anchor 40, since the support stud 90 will protrude from the wallboard 30 precisely where the tip of the threaded shaft 50 is installed. This eliminates the requirement for offsetting the installation of the threaded shaft into the wallboard to compensate for a hook that is not aligned axially with the threaded shaft, as in the prior art hook of FIG. 6.

In FIG. 1, the hanger flange 100 preferably comprises a generally conical inner surface portion 102 extending toward the wall flange 70 and merging with the stud 90. The conical inner surface portion 102 of the hanger flange 100 biases the wire or toothed frame hook supported by the stud 90 axially toward the outer surface 72 of the wall flange 70. The conical inner surface portion 102 also provides for the accommodation of a Phillips driver blade recess or other tool engagement portion on the anchor as discussed further below. The conical inner surface portion 102 and/or the stud 90 may also have ribs aligned axially with the shaft 50 to positively locate or position a toothed picture bracket supported by the anchor.

The anchor 40 also comprises generally a tool engagement portion to facilitate installation of the anchor into the wallboard. In the exemplary embodiment of FIGS. 1 and 2, the tool engagement portion is a Phillips driver blade recess 110 disposed on the end surface 92 of the stud 90. In the exemplary embodiment, the recess 110 includes a slot 111 extending axially some depth into the shaft 50. The depth of the slot 111 requires a trade off between a desire for reduced anchor material and weight and a competing desire for increased anchor strength. In some embodiments, the slot 111 may extend fully through the shaft 50 of the anchor. Alternatively, other driver blade recesses may be used, for example a standard slot recess, or a hex driver recess, or other known recess configurations.

The generally disk shaped hanger flange may alternatively have a generally polygonal sectional shape. In FIG. 3, for example, the hanger flange 101 has a hexagonal sectional shape. In this alternative embodiment, the hexagonal hanger flange 101 forms an outer wrenching surface, which is the tool engagement portion of the anchor. In this embodiment, the stud 90 may have a smaller diameter since a larger diameter is not necessary to accommodate a screw driver blade recess, as is disclosed in other embodiments.

In FIG. 4, the alternative hanger flange 103 has a single lobe extending radially and asymmetrically from one side portion 93 ofthe stud 90. This alternative embodiment may require angular orientation of the hanger flange 103 upon installation of the anchor to ensure that the hanger flange extends in a generally upwardly direction where it is capable of retaining a wire or frame hook on the stud 90. The alternative embodiment of FIG. 4 also includes a driver blade recess 110 on the end surface 92 of the stud 90.

In FIG. 5, the alternative hanger flange 105 has a multiple lobes 107 extending radially and generally symmetrically from corresponding side portions of the stud 90. This alternative embodiment generally does not require angular orientation of the hanger flange 105 upon installation of the anchor since one or more of the lobes 107 will extend sufficiently upwardly to retain a wire or frame hook on the stud 90. The alternative embodiment of FIG. 5 also includes a driver blade recess 110 on the end surface 92 of the stud 90.

The anchor of the present invention is formed preferably as a unitary member. In one embodiment, the anchor is formed unitarily ofa plastic material in a molding operation. In another embodiment, the anchor is formed unitarily of a zinc material in a molding or casting operation.

In other embodiments, the anchor is formed as an assembly comprising multiple components. One component, for example, may include a threaded shaft having an axial bore, and another component may include a hanger flange on a stud, which is inserted into the axial bore of the threaded shaft. The wall flange may be a separate third component, or may be included on either one of the two other components.

## Claims

1. An anchor useable for supporting articles from wallboard, comprising :
a shaft (50) having a leading end portion (52) and a trailing end portion (54) ;
a thread (60) disposed about the shaft ;
a wall flange (70) extending generally radially from the trailing end portion of the shaft, the wall flange having an outer surface (72) ;
characterized in that it comprises a stud (90) protruding from the outer surface (72) of the wall flange (70), the stud (90) aligned substantially axially with the shaft (50) ;
a hanger flange (100 ; 101 ; 103 ; 107) extending generally radially from at least one side portion of the stud (90), the hanger flange (100) spaced axially from the wall flange (70) ;
a tool engagement portion (110) on the anchor.

2. The anchor of Claim 1, wherein the thread (60) is spaced axially from the wall flange (70).

3. The anchor of Claim 2, wherein the thread (60) has a leading end thread portion (62) and a trailing end thread portion (64) with a terminating end (66) spaced axially from the wall flange (70) by an amount less than one thread pitch.

4. The anchor of Claim 3, wherein the leading end thread portion (62) has a narrowing taper decreasing toward the leading end portion (52) of the shaft (50).

5. The anchor of Claim 1, wherein the hanger flange (100) is a generally disk shaped member extending generally radially from all sides of the stud (90).

6. The anchor of Claim 5, wherein the hanger flange (100) is disposed generally symmetrically about the axis of the stud (90).

7. The anchor of Claim 1, wherein the hanger flange (101) has a generally polygonal sectional shape.

8. The anchor of Claim 1, wherein the hanger flange (101) has a hexagonal shape sectional shape, the hexagonal hanger flange (101) being the tool engagement portion.

9. The anchor of Claim 1, wherein the hanger flange (103) comprises at least one lobe protruding generally radially from the stud (90).

10. The anchor of Claim 1, wherein the hanger flange (107) comprises a plurality of lobes protruding generally radially from the stud (90), the plurality of lobes being arranged generally symmetrically about an axial dimension of the stud (90).

11. The anchor of Claim 1, wherein the stud (90) has an end surface (92), the tool engagement portion being a driver blade recess (110) disposed on the end surface (92) of the stud.

12. The anchor of Claim 1 further comprising a wallboard displacing portion (80) on the leading end portion (52) of the shaft (50).

13. The anchor of Claim 12, wherein the wallboard displacing portion is a generally flat drilling blade (80) extending axially from the leading end portion (52) of the shaft (50), the drilling blade having a central spike (82) and at least one peripheral spike (84, 86).

14. The anchor of Claim 13, wherein the leading end thread portion (52) has a narrowing taper decreasing toward the leading end portion (52) of the shaft.

15. The anchor of Claim 1 characterized in that it is a unitary member formed of a plastic material.

16. The anchor of Claim 1 characterized in that it is a unitary member formed of a zinc material.

17. The anchor of Claim 1, wherein the thread (60) has a diameter approximately twice a diameter of the shaft (50).
